# EUROPEAN PATENT APPLICATION

(11) **EP 3 035 193 A1**
(43) Date of publication of application: **22.06.2016**
(21) Application number: 14844807.9
(22) Date of filing: 16.09.2014
(51) Int. Cl.: G06F 9/50

(54) **MEMORY MODULE ACCESS METHOD AND DEVICE**

(30) Priority: 16.09.2013 CN 201310422993
(71) Applicant: Huawei Technologies Co., Ltd., Longgang District Shenzhen, Guangdong 518129 (CN)
(72) Inventor: ZHANG, Lixin, Beijing 100190 (CN); WANG, Cong, Beijing 100190 (CN); HOU, Rui, Beijing 100190 (CN); ZHANG, Ke, Beijing 100190 (CN)
(74) Representative: Gill Jennings & Every LLP
(86) International application number: PCT/CN2014/086592
(87) International publication number: WO 2015/035955

(57) **Abstract**

The present invention relates to the field of computer technologies, and discloses a memory module access method and apparatus, which are used to resolve a problem of a relatively low memory access bandwidth caused by relatively low utilization of bandwidth resources in a multichannel memory system. The method provided in the present invention includes: acquiring, by a first scheduler, a quantity of to-be-sent memory access requests in a second scheduler; and receiving, by the first scheduler, a memory access request, and sending the memory access request through a second memory channel corresponding to the second scheduler. The present invention is applicable to the field of computer technologies, and is used to implement memory module access.

## Description

This application claims priority to Chinese Patent Application No. 201310422993.7, filed with the Chinese Patent Office on September 16, 2013 and entitled "MEMORY MODULE ACCESS METHOD AND APPARATUS", which is incorporated herein by reference in its entirety.

### TECHNICAL FIELD

The present invention relates to the field of computer technologies, and in particular, to a memory module access method and apparatus.

### BACKGROUND

In the field of computer technologies, to improve a memory access bandwidth, a multichannel memory system is used in many computers. The multichannel memory system includes multiple memory channels, and a memory controller communicates with memory modules by using the multiple memory channels. In the multichannel memory system, a mapping relationship between memory addresses and channels is predetermined according to grouping of memory modules, so that load of the channels is balanced. When a memory access request is received, a corresponding channel is determined as a target channel according to a memory address in the memory access request, and the memory access request is sent through the target channel. Assuming that a memory system includes two memory modules, a mapping relationship between a memory address and a channel may be determined according to a value of a specific bit in the memory address. For example, a memory access request in which the seventh bit in a memory address is "0" is sent to a target memory module through a channel 0; a memory access request in which the seventh bit in a memory address is "1" is sent to a target memory module through a channel 1.

During the implementation of the present invention, the inventor finds that the prior art has at least the following problems:
Because channels between memory modules and a memory controller are independent of each other, when multiple received memory access requests are distributed in an unbalanced manner among multiple channels, for example, when n continuously received memory access requests are all sent to a target memory module through a channel 1, the channel 1 may be congested, and other channels are in an idle state, causing a waste of bandwidth resources, and also causing a relatively low memory access bandwidth.

### SUMMARY

Embodiments of the present invention provide a memory module access method and apparatus, which can resolve a problem in the prior art that when multiple received memory access requests are distributed in an unbalanced manner among multiple channels, a waste of bandwidth resources is caused, leading to a relatively low memory access bandwidth.

To achieve the foregoing objective, the embodiments of the present invention use the following technical solutions.

According to a first aspect, an embodiment of the present invention provides a memory module access method, applied to a memory system, where the memory system includes at least a first scheduler and a second scheduler, the first scheduler is corresponding to a first memory channel, the second scheduler is corresponding to a second memory channel, and each memory channel is corresponding to one memory module; and the memory system includes multiple memory modules, where a transmission link is established between the multiple memory modules, and a transmission link is established between the first scheduler and the second scheduler; and
the method includes:
acquiring, by the first scheduler, a quantity of to-be-sent memory access requests in the second scheduler; and
receiving, by the first scheduler, a memory access request, and sending the memory access request through the second memory channel corresponding to the second scheduler.

In a first possible implementation manner, the receiving, by the first scheduler, a memory access request, and sending the memory access request through the second memory channel corresponding to the second scheduler includes:
receiving, by the first scheduler, at least two memory access requests, where the at least two memory access requests include a first memory access request and a second memory access request, where
when the first memory access request is sent through the first memory channel corresponding to the first scheduler, the second memory access request is in a to-be-sent state; and if the second memory channel corresponding to the second scheduler is in an idle state, the first scheduler sends the second memory access through the second memory channel corresponding to the second scheduler.

With reference to the first possible implementation manner, in a second possible implementation manner, before the sending, by the first scheduler, the second memory access request through the second memory channel corresponding to the second scheduler, the method includes:
sending, by the first scheduler, a memory channel occupation request to the second scheduler, to request to occupy the second memory channel corresponding to the second scheduler to send the second memory access request; and
receiving, by the first scheduler, a confirmation response that is returned by the second scheduler in response to the memory channel occupation request.

With reference to the second possible implementation manner, in a third possible implementation manner, a destination address of the second memory access request is located in a memory module corresponding to the first memory channel.

With reference to the first aspect or the first possible implementation manner or second possible implementation manner or third possible implementation manner of the first aspect, in a fourth possible implementation manner, the first scheduler has at least two paths, and establishes connections to the first memory channel and the second memory channel by using the at least two paths.

According to a second aspect, an embodiment of the present invention provides a memory module access method, applied to a memory system, where the memory system includes at least a first scheduler and a second scheduler, the first scheduler is corresponding to a first memory channel, the second scheduler is corresponding to a second memory channel, and each memory channel is corresponding to one memory module; the memory system includes multiple memory modules, where a transmission link is established between the multiple memory modules; and
the method includes:
receiving, by the first scheduler, at least two memory access requests, including a first memory access request and a second memory access request; and
sending, by the first scheduler, the first memory access request through the first memory channel, and sending the second memory access request through the second memory channel.

In a first possible implementation manner, the sending, by the first scheduler, the second memory access request through the second memory channel includes:
when the second memory channel is in an idle state, sending the second memory access request through the second memory channel.

With reference to the first possible implementation manner, in a second possible implementation manner, before the sending the second memory access request through the second memory channel, the method further includes:
sending, by the first scheduler, a memory channel occupation request to the second scheduler, to request to occupy the second memory channel corresponding to the second scheduler to send the second memory access request; and
receiving a confirmation response that is returned by the second scheduler in response to the memory channel occupation request.

With reference to the second possible implementation manner, in a third possible implementation manner, a destination address of the second memory access request is located in a memory module corresponding to the first memory channel.

With reference to the second aspect or the first possible implementation manner, or second possible implementation manner, or third possible implementation manner of the second aspect, in a fourth possible implementation manner, each scheduler has multiple paths, and establishes connections to all memory channels by using the multiple paths.

According to a third aspect, an embodiment of the present invention provides a memory module access method, applied to a memory system, where the memory system includes at least a first memory channel and a second memory channel, and each memory channel is corresponding to one memory module; and the memory system includes multiple memory modules, where a transmission link is established between the multiple memory modules; and
the method includes:
   receiving at least two memory access requests, including a first memory access request and a second memory access request, where destination addresses of the first memory access request and the second memory access request are located in a memory module corresponding to the first memory channel; and
   sending the first memory access request through the first memory channel, and sending the second memory access request through the second memory channel.

In a first possible implementation manner, the sending the second memory access request through the second memory channel includes:
when the second memory channel is in an idle state, sending the second memory access request through the second memory channel.

With reference to the first possible implementation manner, in a second possible implementation manner, the memory system includes at least a first scheduler and a second scheduler, the first scheduler is corresponding to the first memory channel, and the second scheduler is corresponding to the second memory channel; and
before the sending the second memory access request through the second memory channel, the method further includes:
   sending, by the first scheduler, a memory channel occupation request to the second scheduler, to request to occupy the second memory channel corresponding to the second scheduler to send the second memory access request; and
   receiving a confirmation response that is returned by the second scheduler in response to the memory channel occupation request.

With reference to the third aspect or the first possible implementation manner or second possible implementation manner of the third aspect, in a third possible implementation manner, each scheduler has multiple paths, and establishes connections to all memory channels by using the multiple paths.

According to a fourth aspect, an embodiment of the present invention provides a memory controller, applied to a memory system, where the memory controller includes at least a first scheduler and a second scheduler, the first scheduler is corresponding to a first memory channel, the second scheduler is corresponding to a second memory channel, and each memory channel is corresponding to one memory module; and the memory system includes multiple memory modules, where a transmission link is established between the multiple memory modules, and a transmission link is established between the first scheduler and the second scheduler;
the first scheduler is configured to acquire a quantity of to-be-sent memory access requests in the second scheduler; and
the first scheduler is further configured to receive a memory access request, and send the memory access request through the second memory channel corresponding to the second scheduler. In a first possible implementation manner, the first scheduler is configured to receive at least two memory access requests, and the at least two memory access requests include a first memory access request and a second memory access request; and
the first scheduler is further configured to: when the second memory request is in a to-be-sent state, if the second memory channel corresponding to the second scheduler is in an idle state, send the second memory access request through the second memory channel corresponding to the second scheduler.

With reference to the first possible implementation manner, in a second possible implementation manner, the first scheduler is further configured to send a memory channel occupation request to the second scheduler, to request to occupy the second memory channel corresponding to the second scheduler to send the second memory access request; and
the first scheduler is further configured to receive a confirmation response that is returned by the second scheduler in response to the memory channel occupation request.

With reference to the second possible implementation manner, in a third possible implementation manner, a destination address of the second memory access request received by the first scheduler is located in a memory module corresponding to the first memory channel.

With reference to the first aspect or the first possible implementation manner, or second possible implementation manner, or third possible implementation manner of the first aspect, in a fourth possible implementation manner, the first scheduler has at least two paths, and establishes connections to the first memory channel and the second memory channel by using the at least two paths.

According to a fifth aspect, an embodiment of the present invention provides a memory controller, where the memory controller includes at least a first scheduler and a second scheduler, the first scheduler is corresponding to a first memory channel, the second scheduler is corresponding to a second memory channel, and each memory channel is corresponding to one memory module; and the memory controller includes multiple memory modules, where a transmission link is established between the multiple memory modules; and
the first scheduler is configured to receive at least two memory access requests, including a first memory access request and a second memory access request; and send the first memory access request through the first memory channel, and send the second memory access request through the second memory channel.

In a first possible implementation manner, the first scheduler is configured to: when the second memory channel is in an idle state, send the second memory access request through the second memory channel.

With reference to the first possible implementation manner, in a second possible implementation manner, the first scheduler is further configured to send a memory channel occupation request to the second scheduler, to request to occupy the second memory channel corresponding to the second scheduler to send the second memory access request; and
receive a confirmation response that is returned by the second scheduler in response to the memory channel occupation request.

With reference to the second possible implementation manner, in a third possible implementation manner, a destination address of the second memory access request received by the first scheduler is located in a memory module corresponding to the first memory channel.

With reference to the fifth aspect or the first possible implementation manner, or second possible implementation manner, or third possible implementation manner of the fifth aspect, in a fourth possible implementation manner, each scheduler in the memory controller has multiple paths, and establishes connections to all memory channels by using the multiple paths.

According to a sixth aspect, an embodiment of the present invention provides a memory controller, where the memory controller includes at least a first memory channel and a second memory channel, and each memory channel is corresponding to one memory module; and the memory controller includes multiple memory modules, where a transmission link is established between the multiple memory modules;
the memory controller is configured to receive at least two memory access requests, including a first memory access request and a second memory access request, where destination addresses of the first memory access request and the second memory access request are located in a memory module corresponding to the first memory channel; and
the memory controller is further configured to send the first memory access request through the first memory channel, and send the second memory access request through the second memory channel.

In a first possible implementation manner, the memory controller is specifically configured to: when the second memory channel is in an idle state, send the second memory access request through the second memory channel.

With reference to the first possible implementation manner, in a second possible implementation manner, the memory controller includes at least a first scheduler and a second scheduler, the first scheduler is corresponding to the first memory channel, and the second scheduler is corresponding to the second memory channel;
the first scheduler is configured to send a memory channel occupation request to the second scheduler, to request to occupy the second memory channel corresponding to the second scheduler to send the second memory access request; and
the first scheduler is further configured to receive a confirmation response that is returned by the second scheduler in response to the memory channel occupation request.

With reference to the sixth aspect or the first possible implementation manner or second possible implementation manner of the sixth aspect, in a third possible implementation manner, each scheduler in the memory controller has multiple paths, and establishes connections to all memory channels by using the multiple paths.

According to a seventh aspect, an embodiment of the present invention provides a central processing unit CPU, applied to a memory system, where the CPU includes a memory controller, the memory controller includes at least a first scheduler and a second scheduler, the first scheduler is corresponding to a first memory channel, the second scheduler is corresponding to a second memory channel, and each memory channel is corresponding to one memory module; and the memory system includes multiple memory modules, wherein a transmission link is established between the multiple memory modules, and a transmission link is established between the first scheduler and the second scheduler;
the first scheduler is configured to acquire a quantity of to-be-sent memory access requests in the second scheduler; and
the first scheduler is further configured to receive a memory access request, and send the memory access request through the second memory channel corresponding to the second scheduler. In a first possible implementation manner, the first scheduler is configured to receive at least two memory access requests, and the at least two memory access requests include a first memory access request and a second memory access request; and
the first scheduler is further configured to: when the second memory request is in a to-be-sent state, if the second memory channel corresponding to the second scheduler is in an idle state, send the second memory access request through the second memory channel corresponding to the second scheduler.

With reference to the first possible implementation manner, in a second possible implementation manner, the first scheduler is further configured to send a memory channel occupation request to the second scheduler, to request to occupy the second memory channel corresponding to the second scheduler to send the second memory access request; and
the first scheduler is further configured to receive a confirmation response that is returned by the second scheduler in response to the memory channel occupation request.

With reference to the second possible implementation manner, in a third possible implementation manner, a destination address of the second memory access request received by the first scheduler is located in a memory module corresponding to the first memory channel, and the first memory channel is a memory channel corresponding to the first scheduler.

With reference to the seventh aspect or the first possible implementation manner, or second possible implementation manner, or third possible implementation manner of the seventh aspect, in a fourth possible implementation manner, the first scheduler has at least two paths, and establishes connections to the first memory channel and the second memory channel by using the at least two paths.

According to an eighth aspect, an embodiment of the present invention provides a CPU, including a memory controller, where the memory controller includes at least a first scheduler and a second scheduler, the first scheduler is corresponding to a first memory channel, the second scheduler is corresponding to a second memory channel, and each memory channel is corresponding to one memory module; and the memory controller includes multiple memory modules, where a transmission link is established between the multiple memory modules; and
the first scheduler is configured to: receive at least two memory access requests, including a first memory access request and a second memory access request; and send the first memory access request through the first memory channel, and send the second memory access request through the second memory channel.

In a first possible implementation manner, the first scheduler is configured to: when the second memory channel is in an idle state, send the second memory access request through the second memory channel.

With reference to the first possible implementation manner, in a second possible implementation manner, the first scheduler is further configured to send a memory channel occupation request to the second scheduler, to request to occupy the second memory channel corresponding to the second scheduler to send the second memory access request; and
receive a confirmation response that is returned by the second scheduler in response to the memory channel occupation request.

With reference to the second possible implementation manner, in a third possible implementation manner, a destination address of the second memory access request received by the first scheduler is located in a memory module corresponding to the first memory channel.

With reference to the eighth aspect or the first possible implementation manner, or second possible implementation manner, or third possible implementation manner of the eighth aspect, in a fourth possible implementation manner, each scheduler in the memory controller has multiple paths, and establishes connections to all memory channels by using the multiple paths.

According to a ninth aspect, an embodiment of the present invention provides a CPU, including a memory controller, where the memory controller includes at least a first memory channel and a second memory channel, and each memory channel is corresponding to one memory module; and the memory controller includes multiple memory modules, where a transmission link is established between the multiple memory modules;
the memory controller is configured to receive at least two memory access requests, including a first memory access request and a second memory access request, where destination addresses of the first memory access request and the second memory access request are located in a memory module corresponding to the first memory channel; and
the memory controller is further configured to send the first memory access request through the first memory channel, and send the second memory access request through the second memory channel.

In a first possible implementation manner, the memory controller is specifically configured to: when the second memory channel is in an idle state, send the second memory access request through the second memory channel.

With reference to the first possible implementation manner, in a second possible implementation manner, the memory controller includes at least a first scheduler and a second scheduler, the first scheduler is corresponding to the first memory channel, and the second scheduler is corresponding to the second memory channel;
the first scheduler is configured to send a memory channel occupation request to the second scheduler, to request to occupy the second memory channel corresponding to the second scheduler to send the second memory access request; and
the first scheduler is further configured to receive a confirmation response that is returned by the second scheduler in response to the memory channel occupation request.

With reference to the ninth aspect or the first possible implementation manner or second possible implementation manner of the ninth aspect, in a third possible implementation manner, each scheduler in the memory controller has multiple paths, and establishes connections to all memory channels by using the multiple paths.

According to the memory module access method and apparatus provided in the embodiments of the present invention, when multiple memory access requests are received, the multiple received memory access requests may be sent through multiple memory channels. By using the method provided in the embodiments of the present invention, even if the multiple received memory access requests are distributed in an unbalanced manner among the multiple memory channels, the multiple received memory access requests can be sent through another memory channel in an idle state, thereby improving the utilization of bandwidth resources, and improving a memory access bandwidth.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 and FIG. 2 are schematic flowcharts of a memory module access method according to Embodiment 1 of the present invention;
FIG. 3 and FIG. 4 are structural block diagrams of a memory controller according to Embodiment 2 of the present invention;
FIG. 5 and FIG. 6 are structural block diagrams of a CPU according to Embodiment 3 of the present invention;
FIG. 7 and FIG. 8 are schematic flowcharts of a memory module access method according to Embodiment 4 of the present invention;
FIG. 9 is a structural block diagram of a memory controller according to Embodiment 5 of the present invention;
FIG. 10 is a structural block diagram of a CPU according to Embodiment 6 of the present invention;
FIG. 11 and FIG. 12 are schematic flowcharts of a memory module access method according to Embodiment 7 of the present invention;
FIG. 13 is a structural block diagram of a memory controller according to Embodiment 8 of the present invention;
FIG. 14 and FIG. 15 are structural block diagrams of a CPU according to Embodiment 9 of the present invention;
FIG. 16 is a structural diagram of a dual-channel memory system according to Embodiment 10 of the present invention; and
FIG. 17 is a structural diagram of a three-channel memory system according to Embodiment 11 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

### Embodiment 1

This embodiment of the present invention provides a memory module access method, applied to a memory system, where the memory system includes at least a first scheduler and a second scheduler, the first scheduler is corresponding to a first memory channel, the second scheduler is corresponding to a second memory channel, and each memory channel is corresponding to one memory module; and the memory system includes multiple memory modules, where a transmission link is established between the multiple memory modules, and a transmission link is established between the first scheduler and the second scheduler.

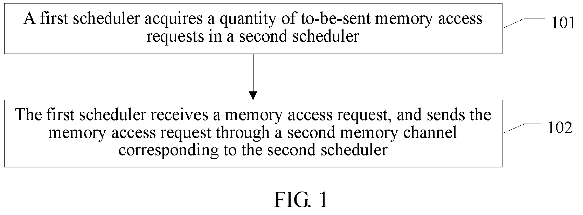

As shown in FIG. 1, the method includes:
101. The first scheduler acquires a quantity of to-be-sent memory access requests in the second scheduler.
102. The first scheduler receives a memory access request, and sends the memory access request through the second memory channel corresponding to the second scheduler.

In this embodiment, the memory system includes multiple schedulers, and a communication link is established between the multiple schedulers, so that each scheduler can acquire a quantity of to-be-sent memory access requests in another scheduler; therefore, after receiving a memory access request, each scheduler can determine an idle memory channel and send the memory access request through the idle memory channel.

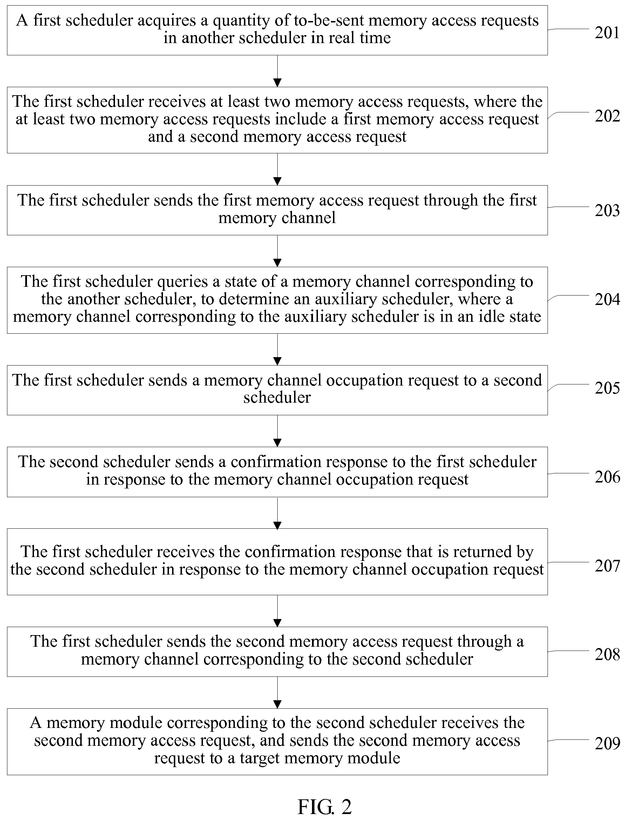

Further, on the basis of the method shown in FIG. 1, this embodiment of the present invention further provides a more detailed memory module access method. As shown in FIG. 2, the method includes:
201. The first scheduler acquires a quantity of to-be-sent memory access requests in another scheduler in real time, where the first scheduler is any scheduler in the multiple schedulers, and the another scheduler is the remaining scheduler in the multiple schedulers except the first scheduler.
202. The first scheduler receives at least two memory access requests, where the at least two memory access requests include a first memory access request and a second memory access request. It should be noted that, generally, destination addresses of the memory access requests received by the first scheduler are all located in a memory module corresponding to the first scheduler, that is, if the memory channel corresponding to the first scheduler is marked as a first memory channel, the destination addresses of both the first memory access request and the second memory access request are located in a memory module corresponding to the first memory channel.
203. If the first scheduler sends the first memory access request through the first memory channel, the second memory access request is in a to-be-sent state.
204. The first scheduler queries a state of a memory channel corresponding to the another scheduler, to determine an auxiliary scheduler, where a memory channel corresponding to the auxiliary scheduler is in an idle state.
   Specifically, the first scheduler may determine an auxiliary scheduler by using the following method: querying, by the first scheduler, a quantity of to-be-sent memory access requests in the another scheduler, and determining a scheduler in which a quantity of to-be-sent memory access requests is 0 as the auxiliary scheduler.
   For ease of understanding, in this embodiment, the determined auxiliary scheduler is marked as a second scheduler, a quantity of current to-be-sent memory access requests in the second scheduler is 0, and a memory channel corresponding to the second scheduler is in an idle state.
   It should be noted that, that the quantity of current to-be-sent memory access requests in the second scheduler is 0 indicates that the memory channel corresponding to the second scheduler is in an absolute idle state. It should be emphasized that, as an optional solution, when the memory channel corresponding to the second scheduler is in a relative idle state (for example, the quantity of to-be-sent memory access requests in the second scheduler is not 0, but the quantity of to-be-sent memory access requests in the second scheduler is much smaller than a quantity of to-be-sent memory access requests in the first scheduler), the first scheduler may still determine the second scheduler as an auxiliary scheduler, and send some of the received memory access requests through the memory channel corresponding to the second scheduler. By using such a method, when receiving a large quantity of memory access requests, the first scheduler may transfer some of to-be-sent memory access requests in the first scheduler to the auxiliary scheduler in time, so that the first scheduler can buffer more memory access requests, thereby improving a communication capacity of the memory system.
205. The first scheduler sends a memory channel occupation request to the second scheduler, to request to occupy the second memory channel corresponding to the second scheduler to send the second memory access request.
206. The second scheduler determines that the memory channel corresponding to the second scheduler is in an idle state, allows the first scheduler to occupy the second memory channel corresponding to the second scheduler, and sends a confirmation response to the first scheduler in response to the memory channel occupation request.
207. The first scheduler receives the confirmation response that is returned by the second scheduler in response to the memory channel occupation request.
208. The first scheduler sends the second memory access request through the second memory channel corresponding to the second scheduler. Generally, when receiving multiple memory access requests in one scheduling timeslot, the first scheduler sends the first received memory access request through the memory channel corresponding to the first scheduler, and sends the second received memory access request through a memory channel corresponding to another scheduler.
   It should be noted that, as an optional solution, the first scheduler may also send the first received memory access request through a memory channel corresponding to another scheduler, and send the second received memory access request through the memory channel corresponding to the first scheduler. As another optional solution, provided that enough idle memory channels exist, the first scheduler may send the multiple received memory access requests through memory channels corresponding to other schedulers preferentially. According to the method provided in this embodiment, a memory access request received by any scheduler may be sent through any idle memory channel, and a specific method for allocating memory channels is not limited in this embodiment.
209. A memory module corresponding to the second scheduler receives the second memory access request, and sends, according to a destination address in the second memory access request and through a transmission link between memory modules, the second memory access request to a destination memory module, that is, a memory module corresponding to the first scheduler.

It should be noted that, in this embodiment, each scheduler has multiple paths, and establishes connections to the multiple memory channels by using the multiple paths, so that each scheduler can send a memory access request through a memory channel corresponding to another scheduler.

It should be emphasized that, the memory module access method provided in this embodiment may be applied to any multichannel memory system with interconnection paths.

As a preferred solution, multiple schedulers in this embodiment may be integrated to be one general scheduler, thereby further improving a connection degree among multiple memory channels. The general scheduler schedules memory access requests on all the memory channels, so as to maximize the utilization of the memory channels.

According to the memory module access method provided in this embodiment of the present invention, each scheduler may acquire a quantity of to-be-sent memory access requests in another scheduler, and when receiving multiple memory access requests, may send the multiple received memory access requests through multiple memory channels. According to the method provided in this embodiment of the present invention, when multiple memory access requests are received, the multiple received memory access requests can be allocated to multiple memory channels for sending, thereby improving the utilization of bandwidth resources, and improving a memory access bandwidth.

### Embodiment 2

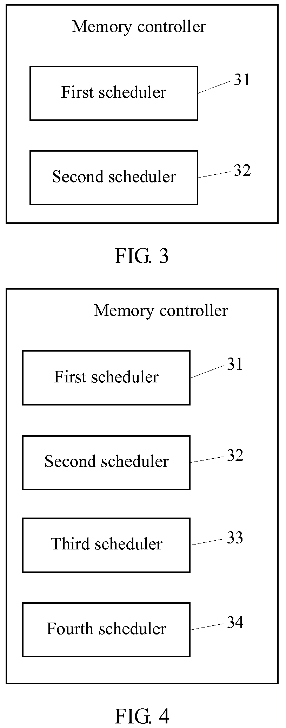

This embodiment of the present invention provides a memory controller, which is applied to a memory system, and can implement the memory module access method shown in FIG. 1 and FIG. 2. As shown in FIG. 3, the memory controller includes at least a first scheduler 31 and a second scheduler 32, the first scheduler 31 is corresponding to a first memory channel, the second scheduler 32 is corresponding to a second memory channel, and each memory channel is corresponding to one memory module; and the memory system includes multiple memory modules, where a transmission link is established between the multiple memory modules, and a transmission link is established between the first scheduler 31 and the second scheduler 32.

The first scheduler 31 is configured to acquire a quantity of to-be-sent memory access requests in the second scheduler.

The first scheduler 31 is further configured to receive a memory access request, and send the memory access request through the second memory channel corresponding to the second scheduler. It should be noted that, the first scheduler 31 and the second scheduler 32 in FIG. 3 are merely used as an example for description. In an actual application, the memory controller includes multiple schedulers. As shown in FIG. 4, the memory controller may further include multiple schedulers such as a third scheduler 33, a fourth scheduler 34, and the like. A communication link is established between schedulers in the memory system, so that each scheduler can acquire a quantity of to-be-sent memory access requests in another scheduler. In this way, after receiving a memory access request, each scheduler can determine an idle memory channel and send the memory access request through the idle memory channel.

Specifically, the first scheduler 31 is configured to receive at least two memory access requests, where the at least two memory access requests include a first memory access request and a second memory access request.

The first scheduler 31 is further configured to: when the second memory access request is in a to-be-sent state, if the second memory channel corresponding to the second scheduler 32 is in an idle state, send the second memory access request through the second memory channel corresponding to the second scheduler 32.

Specifically, the first scheduler 31 is further configured to send a memory channel occupation request to the second scheduler 32, to request to occupy the second memory channel corresponding to the second scheduler 32 to send the second memory access request; and
the first scheduler 31 is further configured to receive a confirmation response that is returned by the second scheduler 32 in response to the memory channel occupation request.

Generally, when the first scheduler 31 receives multiple memory access requests in one scheduling timeslot, the first scheduler 31 sends the first received memory access request through the memory channel corresponding to the first scheduler 31, and sends the second received memory access request through a memory channel corresponding to another scheduler.

It should be noted that, as an optional solution, the first scheduler 31 may also send the first received memory access request through a memory channel corresponding to another scheduler, and send the second received memory access request through the memory channel corresponding to the first scheduler 31. As another optional solution, provided that enough idle memory channels exist, the first scheduler 31 may send the multiple received memory access requests through memory channels corresponding to other schedulers preferentially. According to the method provided in this embodiment, a memory access request received by any scheduler may be sent through any idle memory channel, and a specific method for allocating memory channels is not limited in this embodiment.

A destination address of the second memory access request received by the first scheduler 31 is located in a memory module corresponding to the first memory channel.

It should be noted that, in this embodiment, each scheduler has multiple paths, and establishes connections to the multiple memory channels by using the multiple paths, so that each scheduler can send a memory access request through a memory channel corresponding to another scheduler. For example, the first scheduler 31 has at least two paths, and establishes connections to the first memory channel and the second memory channel by using the at least two paths.

It should be stressed that, the memory controller provided in this embodiment may be applied to any multichannel memory system with interconnection paths.

As a preferred solution, multiple schedulers in the memory controller may be integrated to be one general scheduler, thereby further improving a connection degree among multiple memory channels. The general scheduler schedules memory access requests on all the memory channels, so as to maximize the utilization of the memory channels.

Each scheduler in the memory controller provided in this embodiment of the present invention may acquire a quantity of to-be-sent memory access requests in another scheduler, and when receiving multiple memory access requests, may send the multiple received memory access requests through multiple memory channels. With the memory controller provided in this embodiment of the present invention, when multiple memory access requests are received, the multiple received memory access requests can be allocated to multiple memory channels for sending, thereby improving the utilization of bandwidth resources, and improving a memory access bandwidth.

### Embodiment 3

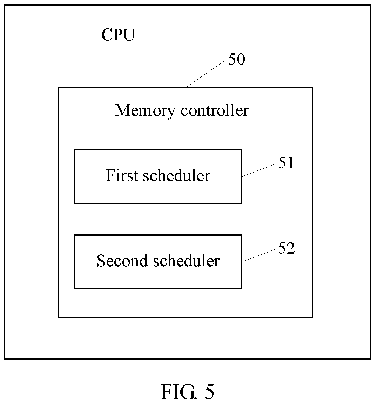

This embodiment of the present invention provides a CPU, which is applied to a memory system, and can implement the method shown in the foregoing FIG. 1 and FIG. 2. As shown in FIG. 5, the CPU includes a memory controller 50, where the memory controller 50 includes a first scheduler 51 and a second scheduler 52, the first scheduler 51 is corresponding to a first memory channel, the second scheduler 52 is corresponding to a second memory channel, and each memory channel is corresponding to one memory module; and the memory system includes multiple memory modules, where a transmission link is established between the multiple memory modules, and a transmission link is established between the first scheduler 51 and the second scheduler 52.

Specifically, the first scheduler 51 is configured to acquire a quantity of to-be-sent memory access requests in the second scheduler 52.

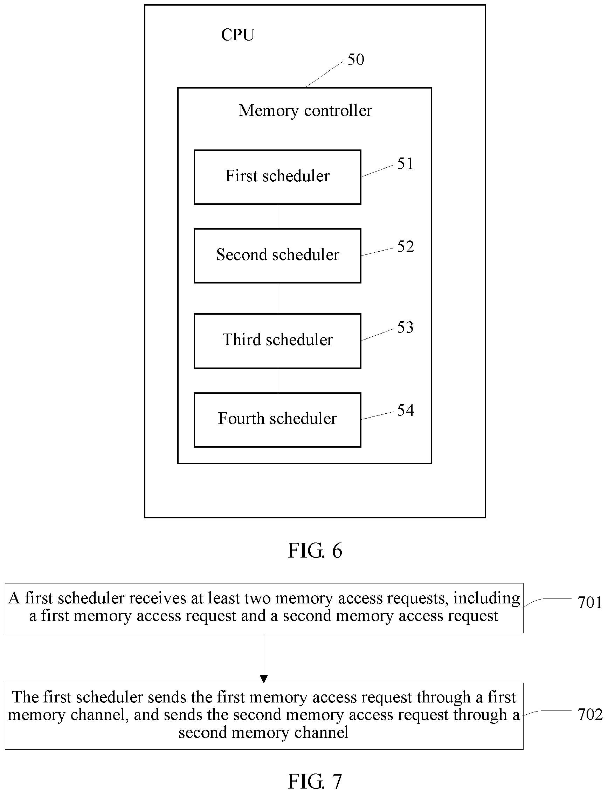

The first scheduler 51 is further configured to receive a memory access request, and send the memory access request through the second memory channel corresponding to the second scheduler. It should be noted that, the first scheduler 51 and the second scheduler 52 in FIG. 5 are merely used as an example for description. In an actual application, the memory controller includes multiple schedulers. As shown in FIG. 6, the memory controller may further include multiple schedulers such as a third scheduler 53, a fourth scheduler 54, and the like. A communication link is established between schedulers in the memory system, so that each scheduler can acquire a quantity of to-be-sent memory access requests in another scheduler. In this way, after receiving a memory access request, each scheduler can determine an idle memory channel and send the memory access request through the idle memory channel.

Specifically, the first scheduler 51 is configured to receive at least two memory access requests, where the at least two memory access requests include a first memory access request and a second memory access request.

The first scheduler 51 is further configured to: when the second memory access request is in a to-be-sent state, if the memory channel corresponding to the second scheduler 52 is in an idle state, send the second memory access request through the memory channel corresponding to the second scheduler 52.

Specifically, the first scheduler 51 is further configured to send a memory channel occupation request to the second scheduler 52, to request to occupy the second memory channel corresponding to the second scheduler 52 to send the second memory access request; and
the first scheduler 51 is further configured to receive a confirmation response that is returned by the second scheduler 52 in response to the memory channel occupation request.

A destination address of the second memory access request received by the first scheduler 51 is located in a memory module corresponding to the first memory channel.

Generally, when receiving multiple memory access requests in one scheduling timeslot, the first scheduler sends the first received memory access request through the memory channel corresponding to the first scheduler, and sends the second received memory access request through a memory channel corresponding to another scheduler.

It should be noted that, as an optional solution, the first scheduler may also send the first received memory access request through a memory channel corresponding to another scheduler, and send the second received memory access request through the memory channel corresponding to the first scheduler. As another optional solution, provided that enough idle memory channels exist, the first scheduler may send the multiple received memory access requests through memory channels corresponding to other schedulers preferentially. According to the method provided in this embodiment, a memory access request received by any scheduler may be sent through any idle memory channel, and a specific method for allocating memory channels is not limited in this embodiment.

It should be noted that, in this embodiment, each scheduler in the memory controller has multiple paths, and establishes connections to the multiple memory channels by using the multiple paths. For example, the first scheduler has at least two paths, and establishes connections to the first memory channel and the second memory channel by using the at least two paths.

It should be stressed that, the CPU provided in this embodiment may be applied to any multichannel memory system with interconnection paths.

As a preferred solution, multiple schedulers in the memory controller 50 may be integrated to be one general scheduler, thereby further improving a connection degree among multiple memory channels. The general scheduler schedules memory access requests on all the memory channels, so as to maximize the utilization of the memory channels.

The CPU provided in this embodiment of the present invention includes a memory controller. Each scheduler in the memory controller may acquire a quantity of to-be-sent memory access requests in another scheduler, and when receiving multiple memory access requests, may send the multiple received memory access requests through multiple memory channels. With the CPU provided in this embodiment of the present invention, when multiple memory access requests are received, the multiple received memory access requests can be allocated to multiple memory channels for sending, thereby improving the utilization of bandwidth resources, and improving a memory access bandwidth.

### Embodiment 4

This embodiment of the present invention provides a memory module access method, applied to a memory system, where the memory system includes at least a first scheduler and a second scheduler, the first scheduler is corresponding to a first memory channel, the second scheduler is corresponding to a second memory channel, and each memory channel is corresponding to one memory module; and the memory system includes multiple memory modules, where a transmission link is established between the multiple memory modules, and a transmission link is established between the first scheduler and the second scheduler.

As shown in FIG. 7, the method includes:
701. The first scheduler receives at least two memory access requests, including a first memory access request and a second memory access request.
702. The first scheduler sends the first memory access request through the first memory channel, and sends the second memory access request through the second memory channel.

According to the method in this embodiment, the memory access requests received by multiple schedulers can be shared by using multiple memory channels of a memory system, thereby improving the utilization of bandwidth resources of the memory channels.

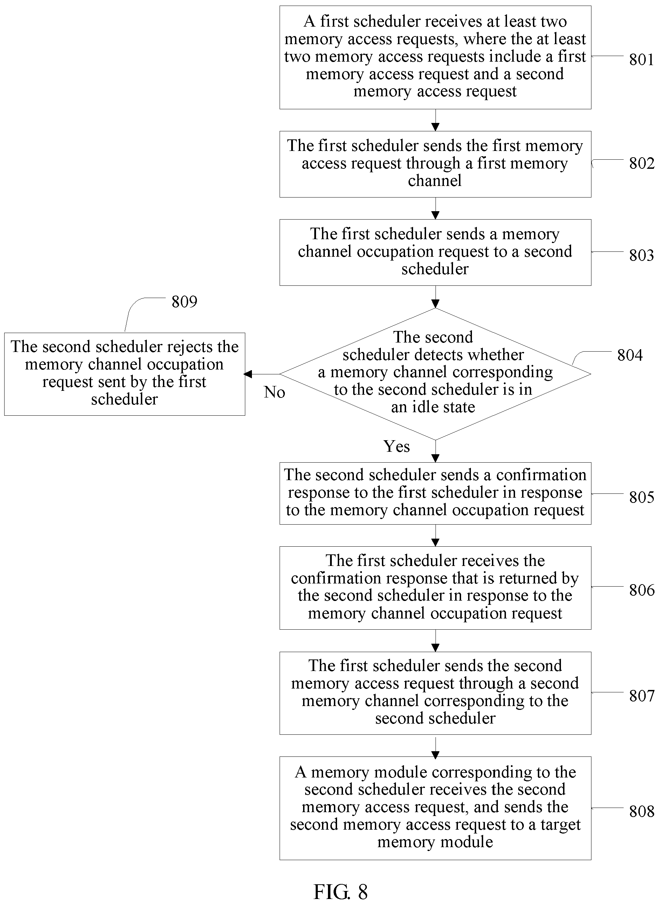

Further, on the basis of the method shown in FIG. 7, this embodiment of the present invention further provides a more detailed memory module access method. As shown in FIG. 8, the method includes:
801. The first scheduler receives at least two memory access requests, where the at least two memory access requests include a first memory access request and a second memory access request. It should be noted that, generally, destination addresses of the memory access requests received by the first scheduler are all located in a memory module corresponding to the first scheduler, that is, if the memory channel corresponding to the first scheduler is marked as a first memory channel, the destination addresses of both the first memory access request and the second memory access request are located in a memory module corresponding to the first memory channel.
802. If the first scheduler sends the first memory access request through the first memory channel, the second memory access request is in a to-be-sent state.
803. The first scheduler sends a memory channel occupation request to the second scheduler, to request to occupy the second memory channel corresponding to the second scheduler to send the second memory access request.
   It should be noted that, the second scheduler is any scheduler in multiple schedulers in the memory system. When receiving multiple memory access requests, the first scheduler may send a memory channel occupation request to all schedulers in the memory system. In this embodiment, the second scheduler is used as an example for specific description.
804. The second scheduler detects whether the memory channel corresponding to the second scheduler is in an idle state; if yes, perform 805; or if not, perform 809.
805. The second scheduler allows the first scheduler to occupy the second memory channel corresponding to the second scheduler, and sends a confirmation response to the first scheduler in response to the memory channel occupation request.
806. The first scheduler receives the confirmation response that is returned by the second scheduler in response to the memory channel occupation request.
807. The first scheduler sends the second memory access request through the second memory channel corresponding to the second scheduler.
   Generally, when receiving multiple memory access requests in one scheduling timeslot, the first scheduler sends the first received memory access request through the memory channel corresponding to the first scheduler, and sends the second received memory access request through a memory channel corresponding to another scheduler.
   It should be noted that, as an optional solution, the first scheduler may also send the first received memory access request through a memory channel corresponding to another scheduler, and send the second received memory access request through the memory channel corresponding to the first scheduler. As another optional solution, provided that enough idle memory channels exist, the first scheduler may send the multiple received memory access requests through memory channels corresponding to other schedulers preferentially. According to the method provided in this embodiment, a memory access request received by any scheduler may be sent through any idle memory channel, and a specific method for allocating memory channels is not limited in this embodiment.
808. A memory module corresponding to the second scheduler receives the second memory access request, and sends, according to a destination address in the second memory access request and through a transmission link between memory modules, the second memory access request to a destination memory module, that is, a memory module corresponding to the first scheduler.
809. The second scheduler rejects the memory channel occupation request sent by the first scheduler.

It should be noted that, in this embodiment, each scheduler has multiple paths, and establishes connections to the multiple memory channels by using the multiple paths, so that each scheduler can send a memory access request through a memory channel corresponding to another scheduler.

It should be emphasized that, the memory module access method provided in this embodiment may be applied to any multichannel memory system with interconnection paths.

As a preferred solution, multiple schedulers in this embodiment may be integrated to be one general scheduler, thereby further improving a connection degree among multiple memory channels. The general scheduler schedules memory access requests on all the memory channels, so as to maximize the utilization of the memory channels.

According to the memory module access method provided in this embodiment of the present invention, when multiple memory access requests are received, the memory access requests received by multiple schedulers can be shared by using multiple memory channels of a memory system, and the multiple memory access requests can be sent through multiple memory channels, thereby improving the utilization of bandwidth resources of the memory channels, and improving a memory access bandwidth.

### Embodiment 5

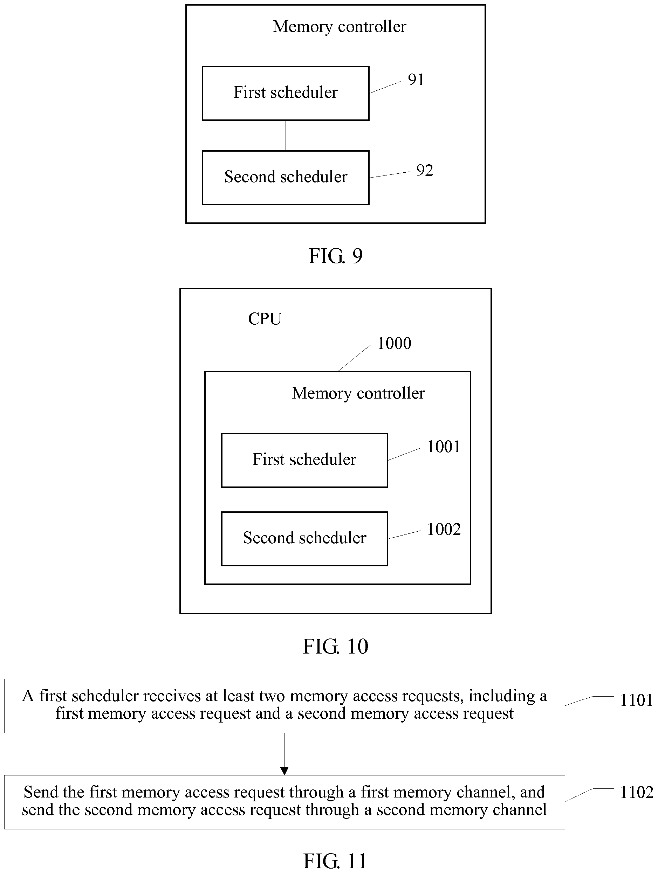

This embodiment of the present invention provides a memory controller, which can implement the methods shown in FIG. 7 and FIG. 8. As shown in FIG. 9, the memory controller includes at least a first scheduler 91 and a second scheduler 92, where the first scheduler 91 is corresponding to a first memory channel, the second scheduler 92 is corresponding to a second memory channel, each memory channel is corresponding to one or more memory modules, and a transmission link is established between the memory modules.

The first scheduler 91 is configured to: receive at least two memory access requests, including a first memory access request and a second memory access request; and send the first memory access request through the first memory channel, and send the second memory access request through the second memory channel.

Specifically, the first scheduler 91 is configured to: when the second memory channel is in an idle state, send the second memory access request through the second memory channel.

Further, the first scheduler 91 is further configured to send a memory channel occupation request to the second scheduler 92, to request to occupy the second memory channel corresponding to the second scheduler 92 to send the second memory access request; and
receive a confirmation response that is returned by the second scheduler 92 in response to the memory channel occupation request.

A destination address of the second memory access request received by the first scheduler 91 is located in a memory module corresponding to the first memory channel.

Generally, when receiving multiple memory access requests in one scheduling timeslot, the first scheduler 91 sends the first received memory access request through the memory channel corresponding to the first scheduler 91, and sends the second received memory access request through a memory channel corresponding to another scheduler.

It should be noted that, as an optional solution, the first scheduler 91 may also send the first received memory access request through a memory channel corresponding to another scheduler, and send the second received memory access request through the memory channel corresponding to the first scheduler 91. As another optional solution, provided that enough idle memory channels exist, the first scheduler 91 may send the multiple received memory access requests through memory channels corresponding to other schedulers preferentially. According to the memory controller provided in this embodiment, a memory access request received by any scheduler may be sent through any idle memory channel, and a specific method for allocating memory channels is not limited in this embodiment.

Specifically, each scheduler in the memory controller has multiple paths, and establishes connections to all memory channels by using the multiple paths.

It should be stressed that, the memory controller provided in this embodiment may be applied to any multichannel memory system with interconnection paths.

As a preferred solution, multiple schedulers in the memory controller may be integrated to be one general scheduler, thereby further improving a connection degree among multiple memory channels. The general scheduler schedules memory access requests on all the memory channels, so as to maximize the utilization of the memory channels.

In the memory controller provided in this embodiment of the present invention, when multiple memory access requests are received, the memory access requests received by multiple schedulers can be shared by using multiple memory channels of a memory system, and the multiple memory access requests can be sent through multiple memory channels, thereby improving the utilization of bandwidth resources of the memory channels, and improving a memory access bandwidth.

### Embodiment 6

This embodiment provides a CPU, which can implement the methods shown in FIG. 7 and FIG. 8. As shown in FIG. 10, the CPU includes a memory controller 1000, where the memory controller 1000 includes at least a first scheduler 1001 and a second scheduler 1002, the first scheduler is corresponding to a first memory channel, the second scheduler is corresponding to a second memory channel, each scheduler is corresponding to a memory channel, and each memory channel is corresponding to one or more memory modules; and the memory controller includes multiple memory modules, where a transmission link is established in advance between the multiple memory modules.

The first scheduler 1001 is configured to: receive at least two memory access requests, including a first memory access request and a second memory access request; and send the first memory access request through the first memory channel, and send the second memory access request through the second memory channel.

Specifically, the first scheduler 1001 is configured to: when the second memory channel is in an idle state, send the second memory access request through the second memory channel.

Generally, when receiving multiple memory access requests in one scheduling timeslot, the first scheduler 1001 sends the first received memory access request through the memory channel corresponding to the first scheduler 1001, and sends the second received memory access request through a memory channel corresponding to another scheduler.

It should be noted that, as an optional solution, the first scheduler 1001 may also send the first received memory access request through a memory channel corresponding to another scheduler, and send the second received memory access request through the memory channel corresponding to the first scheduler 1001. As another optional solution, provided that enough idle memory channels exist, the first scheduler 1001 may send the multiple received memory access requests through memory channels corresponding to other schedulers preferentially. According to the CPU provided in this embodiment, a memory access request received by any scheduler may be sent through any idle memory channel, and a specific method for allocating memory channels is not limited in this embodiment.

Further, the first scheduler 1001 is further configured to send a memory channel occupation request to the second scheduler 1002, to request to occupy the second memory channel corresponding to the second scheduler 1002 to send the second memory access request; and
receive a confirmation response that is returned by the second scheduler 1002 in response to the memory channel occupation request.

A destination address of the second memory access request received by the first scheduler 1001 is located in a memory module corresponding to the first memory channel.

In this embodiment, each scheduler in the memory controller 1000 has multiple paths, and establishes connections to all memory channels by using the multiple paths.

It should be stressed that, the memory controller provided in this embodiment may be applied to any multichannel memory system with interconnection paths.

As a preferred solution, multiple schedulers in the memory controller may be integrated to be one general scheduler, thereby further improving a connection degree among multiple memory channels. The general scheduler schedules memory access requests on all the memory channels, so as to maximize the utilization of the memory channels.

According to the CPU provided in this embodiment of the present invention, when multiple memory access requests are received, the memory access requests received by multiple schedulers can be shared by using multiple memory channels of a memory system, and the multiple memory access requests can be sent through multiple memory channels, thereby improving the utilization of bandwidth resources of the memory channels, and improving a memory access bandwidth.

### Embodiment 7

This embodiment of the present invention provides a memory module access method, applied to a memory system, where the memory system includes at least a first memory channel and a second memory channel, and each memory channel is corresponding to one memory module; and the memory system includes multiple memory modules, where a transmission link is established between the multiple memory modules.

As shown in FIG. 11, the method includes:
1101. The first scheduler receives at least two memory access requests, including a first memory access request and a second memory access request, where destination addresses of both the first memory access request and the second memory access request are located in a memory module corresponding to the first memory channel.
1102: Send the first memory access request through the first memory channel, and send the second memory access request through the second memory channel.

According to the memory module access method provided in this embodiment, when receiving multiple memory access requests, the first scheduler may send the multiple received memory access requests through a memory channel corresponding to another scheduler (for example, a second scheduler in this embodiment).

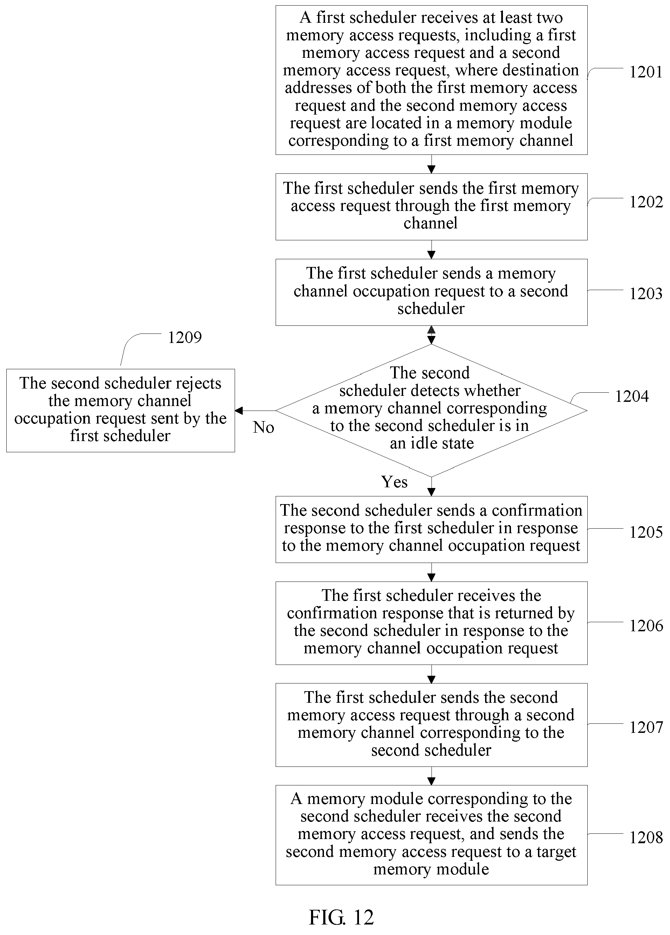

Further, on the basis of the method shown in FIG. 11, this embodiment of the present invention further provides a more detailed memory module access method. As shown in FIG. 12, the method includes:
1201. The first scheduler receives at least two memory access requests, including a first memory access request and a second memory access request, where destination addresses of both the first memory access request and the second memory access request are located in a memory module corresponding to the first memory channel.
1202. The first scheduler sends the first memory access request through the first memory channel, and the second memory access request is in a to-be-sent state.
1203. The first scheduler sends a memory channel occupation request to the second scheduler, to request to occupy the second memory channel corresponding to the second scheduler to send the second memory access request.
   It should be noted that, the second scheduler is any scheduler in multiple schedulers in the memory system. When receiving multiple memory access requests, the first scheduler may send a memory channel occupation request to all schedulers in the memory system. In this embodiment, Embodiment 2 is used as an example for specific description.
1204. The second scheduler detects whether the memory channel corresponding to the second scheduler is in an idle state; if yes, perform 1205; or if not, perform 1209.
1205. The second scheduler allows the first scheduler to occupy the memory channel corresponding to the second scheduler, and sends a confirmation response to the first scheduler in response to the memory channel occupation request.
1206. The first scheduler receives the confirmation response that is returned by the second scheduler in response to the memory channel occupation request.
1207. The first sends the second memory access request through the second memory channel corresponding to the second scheduler.
   Generally, when receiving multiple memory access requests in one scheduling timeslot, the first scheduler sends the first received memory access request through the memory channel corresponding to the first scheduler, and sends the second received memory access request through a memory channel corresponding to another scheduler.
   It should be noted that, as an optional solution, the first scheduler may also send the first received memory access request through a memory channel corresponding to another scheduler, and send the second received memory access request through the memory channel corresponding to the first scheduler. As another optional solution, provided that enough idle memory channels exist, the first scheduler may send the multiple received memory access requests through memory channels corresponding to other schedulers preferentially. According to the method provided in this embodiment, a memory access request received by any scheduler may be sent through any idle memory channel, and a specific method for allocating memory channels is not limited in this embodiment.
1208. A memory module corresponding to the second scheduler receives the second memory access request, and sends, according to a destination address in the second memory access request and through a transmission link between memory modules, the second memory access request to a destination memory module, that is, a memory module corresponding to the first scheduler.
1209. The second scheduler rejects the memory channel occupation request sent by the first scheduler.

It should be noted that, in this embodiment, each scheduler has multiple paths, and establishes connections to the multiple memory channels by using the multiple paths, so that each scheduler can send a memory access request through a memory channel corresponding to another scheduler.

It should be stressed that, the memory module access method provided in this embodiment may be applied to any multichannel memory system with interconnection paths.

As a preferred solution, multiple schedulers in this embodiment may be integrated to be one general scheduler, thereby further improving a connection degree among multiple memory channels. The general scheduler schedules memory access requests on all the memory channels, so as to maximize the utilization of the memory channels.

According to the memory module access method provided in this embodiment of the present invention, when receiving multiple memory access requests, a first scheduler may send the multiple received memory access requests through a memory channel corresponding to another scheduler (for example, a second scheduler), thereby improving the utilization of bandwidth resources of the memory channels, and improving a memory access bandwidth.

### Embodiment 8

This embodiment of the present invention provides a memory controller, which can implement the methods shown in FIG. 10 and FIG. 11, where the memory controller includes at least a first memory channel and a second memory channel, and each memory channel is corresponding to one or more memory modules; and the memory controller includes multiple memory modules, where a transmission link is established between the multiple memory modules.

Specifically, the memory controller is configured to receive at least two memory access requests, including a first memory access request and a second memory access request, where destination addresses of the first memory access request and the second memory access request are located in a memory module corresponding to the first memory channel.

The memory controller is further configured to send the first memory access request through the first memory channel, and send the second memory access request through the second memory channel.

Specifically, the memory controller is configured to: when the second memory channel is in an idle state, send the second memory access request through the second memory channel.

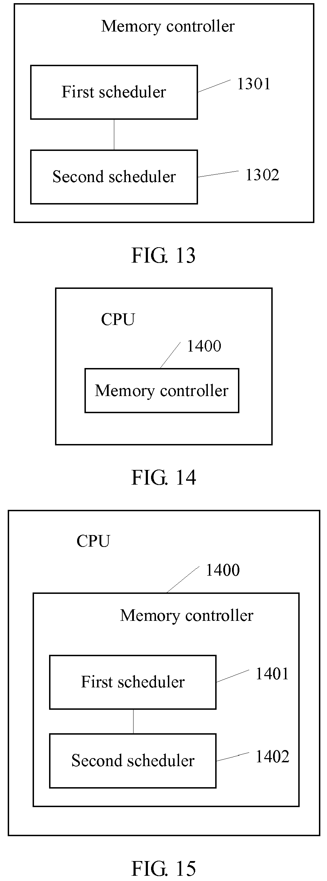

As shown in FIG. 13, the memory controller includes at least a first scheduler 1301 and a second scheduler 1302, where the first scheduler 1301 is corresponding to the first memory channel, and the second scheduler 1302 is corresponding to the second memory channel.

The first scheduler 1301 is configured to send a memory channel occupation request to the second scheduler 1302, to request to occupy the second memory channel corresponding to the second scheduler 1302 to send the second memory access request; and

the first scheduler 1301 is further configured to receive a confirmation response that is returned by the second scheduler 1302 in response to the memory channel occupation request.

Generally, when receiving multiple memory access requests in one scheduling timeslot, the first scheduler 1301 sends the first received memory access request through the memory channel corresponding to the first scheduler 1301, and sends the second received memory access request through a memory channel corresponding to another scheduler.

It should be noted that, as an optional solution, the first scheduler 1301 may also send the first received memory access request through a memory channel corresponding to another scheduler, and send the second received memory access request through the memory channel corresponding to the first scheduler 1301. As another optional solution, provided that enough idle memory channels exist, the first scheduler 1301 may send the multiple received memory access requests through memory channels corresponding to other schedulers preferentially. According to the memory controller provided in this embodiment, a memory access request received by any scheduler may be sent through any idle memory channel, and a specific method for allocating memory channels is not limited in this embodiment.

It should be noted that, each scheduler in the memory controller has multiple paths, and establishes connections to all memory channels by using the multiple paths.

It should be stressed that, the memory controller provided in this embodiment may be applied to any multichannel memory system with interconnection paths.

As a preferred solution, multiple schedulers in the memory controller may be integrated to be one general scheduler, thereby further improving a connection degree among multiple memory channels. The general scheduler schedules memory access requests on all the memory channels, so as to maximize the utilization of the memory channels.

According to the memory controller provided in this embodiment of the present invention, when receiving multiple memory access requests, a first scheduler in the memory controller may send the multiple received memory access requests through a memory channel corresponding to another scheduler (for example, a second scheduler), thereby improving the utilization of bandwidth resources of the memory channels, and improving a memory access bandwidth.

### Embodiment 9

This embodiment of the present invention provides a CPU, which can implement the methods shown in FIG. 10 and FIG. 11. As shown in FIG. 14, the CPU includes a memory controller 1400, where the memory controller 1400 includes at least a first memory channel and a second memory channel, and each memory channel is corresponding to one or more memory modules; and the memory controller 1400 includes multiple memory modules, where a transmission link is established between the multiple memory modules.

The memory controller 1400 is configured to receive at least two memory access requests, including a first memory access request and a second memory access request, where destination addresses of the first memory access request and the second memory access request are located in a memory module corresponding to the first memory channel.

The memory controller 1400 is further configured to send the first memory access request through the first memory channel, and send the second memory access request through the second memory channel.

Further, the memory controller 1400 is specifically configured to: when the second memory channel is in an idle state, send the second memory access request through the second memory channel.

As shown in FIG. 15, the memory controller 1400 includes at least a first scheduler 1401 and a second scheduler 1402, where the first scheduler 1401 is corresponding to the first memory channel, and the second scheduler 1402 is corresponding to the second memory channel.

The first scheduler 1401 is configured to send a memory channel occupation request to the second scheduler 1402, to request to occupy the second memory channel corresponding to the second scheduler 1402 to send the second memory access request; and
the first scheduler 1401 is further configured to receive a confirmation response that is returned by the second scheduler 1402 in response to the memory channel occupation request.

Generally, when receiving multiple memory access requests in one scheduling timeslot, the first scheduler 1401 sends the first received memory access request through the memory channel corresponding to the first scheduler 1401, and sends the second received memory access request through a memory channel corresponding to another scheduler.

It should be noted that, as an optional solution, the first scheduler 1401 may also send the first received memory access request through a memory channel corresponding to another scheduler, and send the second received memory access request through the memory channel corresponding to the first scheduler 1401. As another optional solution, provided that enough idle memory channels exist, the first scheduler 1401 may send the multiple received memory access requests through memory channels corresponding to other schedulers preferentially. According to the CPU provided in this embodiment, a memory access request received by any scheduler may be sent through any idle memory channel, and a specific method for allocating memory channels is not limited in this embodiment.

It should be noted that, in this embodiment, each scheduler in the memory controller 1400 has multiple paths, and establishes connections to all memory channels by using the multiple paths.

It should be stressed that, the memory controller provided in this embodiment may be applied to any multichannel memory system with interconnection paths.

As a preferred solution, multiple schedulers in the memory controller may be integrated to be one general scheduler, thereby further improving a connection degree among multiple memory channels. The general scheduler schedules memory access requests on all the memory channels, so as to maximize the utilization of the memory channels.

The CPU provided in this embodiment of the present invention includes a memory controller. When receiving multiple memory access requests, a first scheduler in the memory controller may send the multiple received memory access requests through a memory channel corresponding to another scheduler (for example, a second scheduler), thereby improving the utilization of bandwidth resources of the memory channels, and improving a memory access bandwidth.

### Embodiment 10

For ease of understanding, in this embodiment, two schedulers are used as an example to describe the technical solutions provided in the present invention.

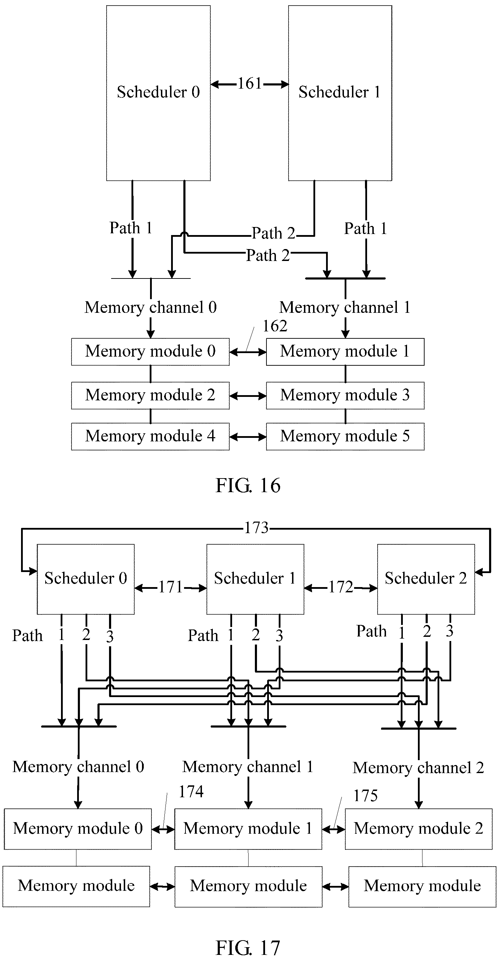

This embodiment provides a memory module access method, which is applied to a memory system. As shown in FIG. 16, the memory system includes a scheduler 0 and a scheduler 1, where the scheduler 0 is corresponding to a memory channel 0, and the scheduler 1 is corresponding to a memory channel 1; and the memory channel 0 is connected to a memory module 0, a memory module 2, and a memory module 4, and the memory channel 1 is connected to a memory module 1, a memory module 3, and a memory module 5.

Specifically, as shown in FIG. 16, a transmission link 161 is established between the scheduler 0 and the scheduler 1, and is used for communication between the scheduler 0 and the scheduler 1; the scheduler 0 has a path 1 and a path 2, where the path 1 is connected to the memory channel 0, and the path 2 is connected to the memory channel 1; the scheduler 1 has a path 1 and a path 2, where the path 1 is connected to the memory channel 1, and the path 2 is connected to the memory channel 0; and a transmission link 162 is established between the memory module 0 and the memory module 1, and is used for communication between the memory module 0 and the memory module 1.

With reference to the memory system shown in FIG. 16, the memory module access method provided in this embodiment includes:
S1. The scheduler 0 and the scheduler 1 exchange quantities of to-be-sent memory access requests with each other by using the transmission link 161.
S2. When receiving at least two memory access requests, the scheduler 0 sends the first memory access request through the path 1, and also checks whether the scheduler 1 currently has a memory access request needing to be sent; and if the scheduler 1 currently does not have a memory access request needing to be sent, sends the second memory access request in the same scheduling timeslot through the path 2.
   It should be noted that, generally, a destination address of the memory access request received by the scheduler 0 is located in a memory module corresponding to the memory channel 0, that is, the memory module 0, the memory module 2, or the memory module 4; a destination address of the memory access request received by the scheduler 1 is located in a memory module corresponding to the memory channel 1, that is, the memory module 1, the memory module 3, or the memory module 5.
S3. Send the second memory access request to the memory channel 1 through the path 2 of the scheduler 0, the memory module 1 receives the second memory access request, forwards the second memory access request to the memory module 0 through a transmission link 152, and forwards the second memory access request to a destination memory module by using the memory module 0.
   It should be noted that, in the foregoing S1 to S3, the scheduler 0 offloads memory access requests received by the scheduler 0 to the memory channel corresponding to the scheduler 1 (that is, the memory channel 1). According to the same method, the scheduler 1 in this embodiment may offload memory access requests received by the scheduler 1 to the memory channel corresponding to the scheduler 0, which is not described again herein.

According to the memory module access method provided in this embodiment of the present invention, each scheduler may acquire a quantity of to-be-sent memory access requests in another scheduler, and when receiving multiple memory access requests, may send the multiple received memory access requests through multiple memory channels. According to the method provided in this embodiment of the present invention, when multiple memory access requests are received, the multiple received memory access requests can be allocated to multiple memory channels for sending, thereby improving the utilization of bandwidth resources, and improving a memory access bandwidth.

### Embodiment 11

In FIG. 16, a dual-channel memory system is used as an example for description. A memory module access method provided in the present invention is applicable to a multichannel system. Next, in this embodiment, an N-channel memory system is used as an example for further description.

The N-channel memory system includes N schedulers, N memory channels, and N memory modules, where the N schedulers may be marked as: a scheduler 0, a scheduler 1, ..., and a scheduler N-1; the N memory channels are marked as: a memory channel 0, a memory channel 1, ..., and a memory channel N-1; and the N memory modules are marked as: a memory module 0, a memory module 1, ..., and a memory module N-1. The schedulers, the memory channels, and the memory modules are in a one-to-one correspondence, for example, the scheduler 0 is corresponding to the memory channel 0, and the memory channel 0 is corresponding to the memory module 0. Each scheduler has N paths (which may be marked as: a path 1, a path 2, ..., and a path N), and the N paths are respectively connected to the N memory channels. For ease of statistics, a connection relationship between a path and a memory channel may be set according to a preset rule. For example, a connection relationship between a path and a memory channel may be set according to a method in which a path m (0≤m≤N) of a scheduler n (0≤n≤N-1) is connected to a memory channel (n+m) mod N, where mod is used to indicate getting a remainder.

When receiving x memory access requests, if N channels are all in an idle state, the scheduler n may send the x memory access requests successively by using the local path 1, path 2, ..., and path (n+x) mod N. When x≤N, the x memory access requests may be sent to the memory module in one scheduling timeslot; when N<x≤2N, the x memory access requests may be sent to the memory module in two scheduling timeslots. The rest may be deduced by analogy, which is not described again herein.

For ease of understanding, next, a three-channel memory system is used as an example for description. As shown in FIG. 17, the memory system includes a scheduler 0, a scheduler 1, and a scheduler 2, where the scheduler 0 is corresponding to a memory channel 0, the scheduler 1 is corresponding to a memory channel 1, and the scheduler 2 is corresponding to a memory channel 2; and the memory channel 0 is connected to a memory module 0, the memory channel 1 is connected to a memory module 1, and the memory channel 2 is connected to a memory module 2. Specifically, as shown in FIG. 17, a transmission link 171 is established between the scheduler 0 and the scheduler 1, a transmission link 172 is established between the scheduler 1 and the scheduler 2, a transmission link 173 is established between the scheduler 0 and the scheduler 2, and the transmission links 171 to 173 are used for communication among the scheduler 0, the scheduler 1, and the scheduler 2.

The scheduler 0 has a path 1, a path 2, and a path 3, where the path 1 is connected to the memory channel 0, the path 2 is connected to the memory channel 1, and the path 3 is connected to the memory channel 2; the scheduler 1 has a path 1, a path 2, and a path 3, where the path 1 is connected to the memory channel 1, the path 2 is connected to the memory channel 3, the path 3 is connected to the memory channel 0; and the scheduler 2 has a path 1, a path 2 and a path 3, where the path 1 is connected to the memory channel 2, the path 2 is connected to the memory channel 0, and the path 3 is connected to the memory channel 1.

A transmission link 174 is established between the memory module 0 and the memory module 1, and is used for communication between the memory module 0 and the memory module 1; and a transmission link 175 is established between the memory module 1 and the memory module 2, and is used for communication between the memory module 1 and the memory module 2.

According to the three-channel memory system shown in FIG. 17, the memory module access method is specifically implemented as follows:
(1) When the scheduler n receives multiple memory access requests, send, by using the path 1, the first memory access request needing to be sent.
(2) If the scheduler n has the second memory access request needing to be sent, detect whether a scheduler (n+1)mod3 currently has a memory access request needing to be sent; and if not, send, to the path 2, the second memory access request needing to be sent.

If the scheduler (n+1)mod3 currently has a memory access request needing to be sent, detect whether a scheduler (n+2)mod3 currently has a memory access request needing to be sent; and if not, send, to the path 3, the second memory access request needing to be sent. (3) If the scheduler n has the third ready request, the scheduler (n+1)mod3 currently does not have a memory access request needing to be sent, and the scheduler (n+2)mod3 currently does not have a memory access request needing to be sent either, the scheduler n sends, to the path 2, the second memory needing to be sent, and sends, to the path 3, the third memory request needing to be sent. According to the memory module access method provided in this embodiment of the present invention, each scheduler may acquire a quantity of to-be-sent memory access requests in another scheduler; and when receiving multiple memory access requests, may send the multiple received memory access requests through multiple memory channels. According to the method provided in this embodiment of the present invention, when multiple memory access requests are received, the multiple received memory access requests can be allocated to multiple memory channels for sending, thereby improving the utilization of bandwidth resources, and improving a memory access bandwidth.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A memory module access method, applied to a memory system, wherein the memory system comprises at least a first scheduler and a second scheduler, the first scheduler is corresponding to a first memory channel, the second scheduler is corresponding to a second memory channel, and each memory channel is corresponding to one memory module; the memory system comprises multiple memory modules, wherein a transmission link is established between the multiple memory modules, and a transmission link is established between the first scheduler and the second scheduler; and
the method comprises:
acquiring, by the first scheduler, a quantity of to-be-sent memory access requests in the second scheduler; and
receiving, by the first scheduler, a memory access request, and sending the memory access request through the second memory channel corresponding to the second scheduler.

2. The method according to claim 1, wherein the receiving, by the first scheduler, a memory access request, and sending the memory access request through the second memory channel corresponding to the second scheduler comprises:
receiving, by the first scheduler, at least two memory access requests, wherein the at least two memory access requests comprise a first memory access request and a second memory access request, wherein
when the first memory access request is sent through the first memory channel corresponding to the first scheduler, the second memory access request is in a to-be-sent state; and if the second memory channel corresponding to the second scheduler is in an idle state, the first scheduler sends the second memory access through the second memory channel corresponding to the second scheduler.

3. The method according to claim 2, wherein before the sending, by the first scheduler, the second memory access request through the second memory channel corresponding to the second scheduler, the method further comprises:
sending, by the first scheduler, a memory channel occupation request to the second scheduler, to request to occupy the second memory channel corresponding to the second scheduler to send the second memory access request; and
receiving, by the first scheduler, a confirmation response that is returned by the second scheduler in response to the memory channel occupation request.

4. The method according to claim 3, wherein a destination address of the second memory access request is located in a memory module corresponding to the first memory channel.

5. The method according to any one of claims 1 to 4, wherein the first scheduler has at least two paths, and establishes connections to the first memory channel and the second memory channel by using the at least two paths.

6. A memory module access method, applied to a memory system, wherein the memory system comprises at least a first scheduler and a second scheduler, the first scheduler is corresponding to a first memory channel, the second scheduler is corresponding to a second memory channel, and each memory channel is corresponding to one memory module; the memory system comprises multiple memory modules, wherein a transmission link is established between the multiple memory modules; and
the method comprises:
receiving, by the first scheduler, at least two memory access requests, comprising a first memory access request and a second memory access request; and
sending, by the first scheduler, the first memory access request through the first memory channel, and sending the second memory access request through the second memory channel.

7. The method according to claim 6, wherein the sending, by the first scheduler, the second memory access request through the second memory channel comprises:
when the second memory channel is in an idle state, sending the second memory access request through the second memory channel.

8. The method according to claim 7, wherein before the sending the second memory access request through the second memory channel, the method comprises:
sending, by the first scheduler, a memory channel occupation request to the second scheduler, to request to occupy the second memory channel corresponding to the second scheduler to send the second memory access request; and
receiving a confirmation response that is returned by the second scheduler in response to the memory channel occupation request.

9. The method according to claim 8, wherein a destination address of the second memory access request is located in a memory module corresponding to the first memory channel.

10. The method according to any one of claims 6 to 9, wherein each scheduler has multiple paths, and establishes connections to all memory channels by using the multiple paths.

11. A memory module access method, applied to a memory system, wherein the memory system comprises at least a first memory channel and a second memory channel, and each memory channel is corresponding to one memory module; the memory system comprises multiple memory modules, wherein a transmission link is established between the multiple memory modules; and
the method comprises:
receiving at least two memory access requests, comprising a first memory access request and a second memory access request, wherein destination addresses of the first memory access request and the second memory access request are located in a memory module corresponding to the first memory channel; and
sending the first memory access request through the first memory channel, and sending the second memory access request through the second memory channel.

12. The method according to claim 11, wherein the sending the second memory access request through the second memory channel comprises:
when the second memory channel is in an idle state, sending the second memory access request through the second memory channel.

13. The method according to claim 12, wherein the memory system comprises at least a first scheduler and a second scheduler, the first scheduler is corresponding to the first memory channel, and the second scheduler is corresponding to the second memory channel; and
before the sending the second memory access request through the second memory channel, the method further comprises:
sending, by the first scheduler, a memory channel occupation request to the second scheduler, to request to occupy the second memory channel corresponding to the second scheduler to send the second memory access request; and
receiving a confirmation response that is returned by the second scheduler in response to the memory channel occupation request.

14. The method according to any one of claims 11 to 13, wherein each scheduler has multiple paths, and establishes connections to all memory channels by using the multiple paths.

15. A memory controller, applied to a memory system, wherein the memory controller comprises at least a first scheduler and a second scheduler, the first scheduler is corresponding to a first memory channel, the second scheduler is corresponding to a second memory channel, and each memory channel is corresponding to one memory module; and the memory system comprises multiple memory modules, wherein a transmission link is established between the multiple memory modules, and a transmission link is established between the first scheduler and the second scheduler;
the first scheduler is configured to acquire a quantity of to-be-sent memory access requests in the second scheduler; and
the first scheduler is further configured to receive a memory access request, and send the memory access request through the second memory channel corresponding to the second scheduler.

16. The memory controller according to claim 15, wherein the first scheduler is configured to receive at least two memory access requests, wherein the at least two memory access requests comprise a first memory access request and a second memory access request; and
the first scheduler is further configured to: when the second memory request is in a to-be-sent state, if the second memory channel corresponding to the second scheduler is in an idle state, send the second memory access request through the second memory channel corresponding to the second scheduler.

17. The memory controller according to claim 16, wherein the first scheduler is further configured to send a memory channel occupation request to the second scheduler, to request to occupy the second memory channel corresponding to the second scheduler to send the second memory access request; and
the first scheduler is further configured to receive a confirmation response that is returned by the second scheduler in response to the memory channel occupation request.

18. The memory controller according to claim 17, wherein a destination address of the second memory access request received by the first scheduler is located in a memory module corresponding to the first memory channel.

19. The memory controller according to any one of claims 15 to 18, wherein the first scheduler has at least two paths, and establishes connections to the first memory channel and the second memory channel by using the at least two paths.

20. A memory controller, wherein the memory controller comprises at least a first scheduler and a second scheduler, the first scheduler is corresponding to a first memory channel, the second scheduler is corresponding to a second memory channel, and each memory channel is corresponding to one memory module; and the memory controller comprises multiple memory modules, wherein a transmission link is established between the multiple memory modules; and
the first scheduler is configured to receive at least two memory access requests, comprising a first memory access request and a second memory access request; and send the first memory access request through the first memory channel, and send the second memory access request through the second memory channel.

21. The memory controller according to claim 20, wherein the first scheduler is configured to:
when the second memory channel is in an idle state, send the second memory access request through the second memory channel.

22. The memory controller according to claim 21, wherein the first scheduler is further configured to: send a memory channel occupation request to the second scheduler, to request to occupy the second memory channel corresponding to the second scheduler to send the second memory access request; and
receive a confirmation response that is returned by the second scheduler in response to the memory channel occupation request.

23. The memory controller according to claim 22, wherein a destination address of the second memory access request received by the first scheduler is located in a memory module corresponding to the first memory channel.

24. The memory controller according to any one of claims 20 to 23, wherein each scheduler in the memory controller has multiple paths, and establishes connections to all memory channels by using the multiple paths.

25. A memory controller, wherein the memory controller comprises at least a first memory channel and a second memory channel, and each memory channel is corresponding to one memory module; and the memory controller comprises multiple memory modules, wherein a transmission link is established between the multiple memory modules;
the memory controller is configured to receive at least two memory access requests, comprising a first memory access request and a second memory access request, wherein destination addresses of the first memory access request and the second memory access request are located in a memory module corresponding to the first memory channel; and
the memory controller is further configured to send the first memory access request through the first memory channel, and send the second memory access request through the second memory channel.

26. The memory controller according to claim 25, wherein the memory controller is specifically configured to: when the second memory channel is in an idle state, send the second memory access request through the second memory channel.

27. The memory controller according to claim 26, wherein the memory controller comprises at least a first scheduler and a second scheduler, the first scheduler is corresponding to the first memory channel, and the second scheduler is corresponding to the second memory channel;
the first scheduler is configured to send a memory channel occupation request to the second scheduler, to request to occupy the second memory channel corresponding to the second scheduler to send the second memory access request; and
the first scheduler is further configured to receive a confirmation response that is returned by the second scheduler in response to the memory channel occupation request.

28. The memory controller according to any one of claims 25 to 27, wherein each scheduler in the memory controller has multiple paths, and establishes connections to all memory channels by using the multiple paths.

29. A central processing unit CPU, applied to a memory system, wherein the CPU comprises a memory controller, the memory controller comprises at least a first scheduler and a second scheduler, the first scheduler is corresponding to a first memory channel, the second scheduler is corresponding to a second memory channel, and each memory channel is corresponding to one memory module; and the memory system comprises multiple memory modules, wherein a transmission link is established between the multiple memory modules, and a transmission link is established between the first scheduler and the second scheduler;
the first scheduler is configured to acquire a quantity of to-be-sent memory access requests in the second scheduler; and
the first scheduler is further configured to receive a memory access request, and send the memory access request through the second memory channel corresponding to the second scheduler.

30. The CPU according to claim 29, wherein the first scheduler is configured to receive at least two memory access requests, wherein the at least two memory access requests comprise a first memory access request and a second memory access request, wherein
the first scheduler is further configured to: when the second memory request is in a to-be-sent state, if the second memory channel corresponding to the second scheduler is in an idle state, send the second memory access request through the second memory channel corresponding to the second scheduler.

31. The CPU according to claim 30, wherein the first scheduler is further configured to send a memory channel occupation request to the second scheduler, to request to occupy the second memory channel corresponding to the second scheduler to send the second memory access request; and
the first scheduler is further configured to receive a confirmation response that is returned by the second scheduler in response to the memory channel occupation request.

32. The CPU according to claim 31, wherein a destination address of the second memory access request received by the first scheduler is located in a memory module corresponding to the first memory channel.

33. The CPU according to any one of claims 29 to 32, wherein the first scheduler has at least two paths, and establishes connections to the first memory channel and the second memory channel by using the at least two paths.

34. A central processing unit CPU, comprising a memory controller, wherein the memory controller comprises at least a first scheduler and a second scheduler, the first scheduler is corresponding to a first memory channel, the second scheduler is corresponding to a second memory channel, and each memory channel is corresponding to one memory module; and the memory controller comprises multiple memory modules, wherein a transmission link is established between the multiple memory modules; and
the first scheduler is configured to: receive at least two memory access requests, comprising a first memory access request and a second memory access request; and send the first memory access request through the first memory channel, and send the second memory access request through the second memory channel.

35. The CPU according to claim 34, wherein the first scheduler is configured to: when the second memory channel is in an idle state, send the second memory access request through the second memory channel.

36. The CPU according to claim 35, wherein the first scheduler is further configured to: send a memory channel occupation request to the second scheduler, to request to occupy the second memory channel corresponding to the second scheduler to send the second memory access request; and
receive a confirmation response that is returned by the second scheduler in response to the memory channel occupation request.

37. The CPU according to claim 36, wherein a destination address of the second memory access request received by the first scheduler is located in a memory module corresponding to the first memory channel.

38. The CPU according to any one of claims 34 to 37, wherein each scheduler in the memory controller has multiple paths, and establishes connections to all memory channels by using the multiple paths.

39. A central processing unit CPU, comprising a memory controller, wherein the memory controller comprises at least a first memory channel and a second memory channel, and each memory channel is corresponding to one memory module; and the memory controller comprises multiple memory modules, wherein a transmission link is established between the multiple memory modules;
the memory controller is configured to receive at least two memory access requests, comprising a first memory access request and a second memory access request, wherein destination addresses of the first memory access request and the second memory access request are located in a memory module corresponding to the first memory channel; and
the memory controller is further configured to send the first memory access request through the first memory channel, and send the second memory access request through the second memory channel.

40. The CPU according to claim 39, wherein the memory controller is specifically configured to: when the second memory channel is in an idle state, send the second memory access request through the second memory channel.

41. The CPU according to claim 40, wherein the memory controller comprises at least a first scheduler and a second scheduler, the first scheduler is corresponding to the first memory channel, and the second scheduler is corresponding to the second memory channel;
the first scheduler is configured to send a memory channel occupation request to the second scheduler, to request to occupy the second memory channel corresponding to the second scheduler to send the second memory access request; and
the first scheduler is further configured to receive a confirmation response that is returned by the second scheduler in response to the memory channel occupation request.

42. The CPU according to any one of claims 39 to 41, wherein each scheduler in the memory controller has multiple paths, and establishes connections to all memory channels by using the multiple paths.
